# EUROPÄISCHE PATENTSCHRIFT

(11) **EP 1 880 879 B1**
(45) Veröffentlichungstag und Bekanntmachung des Hinweises auf die Patenterteilung: **05.03.2014**
(21) Anmeldenummer: 07013337.6
(22) Anmeldetag: 07.07.2007
(51) Int. Cl.: B60D 1/54

(54) **Schwenkbare Anhängevorrichtung für Zugfahrzeuge**
Pivotable towing device for traction vehicles
Dispositif d'attelage pivotant pour tracteurs

(30) Priorität: 20.07.2006 DE 202006011346 U
(43) Veröffentlichungstag der Anmeldung: 23.01.2008
(73) Patentinhaber: TriMas Corporation (Germany) GmbH, 04746 Hartha (DE)
(72) Erfinder: Rampp, Armin, 86513 Ursberg (DE); Feustle, Wolfgang, 89312 Günzburg (DE); Müller, Tanja, 89367 Waldstetten (DE)
(74) Vertreter: Ernicke, Klaus Stefan

(56) Entgegenhaltungen:
- EP-A- 1 380 447
- EP-A- 1 541 385
- EP-A- 1 650 059
- WO-A-2005/110781
- DE-U1-202006 008 461

## Beschreibung

Die Erfindung betrifft eine schwenkbare Anhängevorrichtung für Zugfahrzeuge.

Die EP 1 650 059 A1 zeigt eine Anhängevorrichtung für Zugfahrzeuge mit einem Gestell und einer mehrachsig beweglichen Zugstange. Ein gestellfester Antriebsmotor schiebt und zieht mittels einer Verstellstange die Zugstange, die dabei Schwenk- und Linearbewegungen ausführt. Die Anhängevorrichtung weist ein um verschiedene gestellfeste Bewegungsfolgerstifte schwenkbares Kupplungsgehäuse auf, in dessen Innenraum die Zugstange angeordnet und mit Bewegungsfolgerstiften in beidseitigen Schlitzen der Kupplungsgehäusewände linear geführt ist. Die Zugstange ist an einem das Kupplungsgehäuse umgebenden Schutzgehäuse drehbar gelagert. Die Zugstange kämmt mit einer Zahnleiste an der Innenseite des Kupplungsgehäuses und führt hierüber bei einer linearen Relativbewegung zum Kupplungsgehäuse eine Drehung aus. Seitliche heb- und senkbare Steuerscheiben am Kupplungsgehäuse steuern im Zusammenwirken mit Bewegungsfolgerstiften die Schwenkbewegungen des Kupplungsgehäuses und arretieren die Zugstange am Kupplungsgehäuse oder geben deren Relativbewegung frei.

Eine andere schwenkbare Anhängevorrichtung ist aus der EP 1 478 528 B1 bekannt. Sie besteht aus einer gekrümmten Zugstange, die um zwei rotatorische Achsen beweglich an einem Gestell der Anhängevorrichtung gelagert ist. Die Anhängevorrichtung weist ferner einen mechanischen Antrieb zur Bewegung der Zugstange zwischen einer Betriebsstellung und einer Ruhestellung auf, wobei der Antrieb eine Einrichtung zur Erzeugung einer zumindest bereichsweise überlagerten Rotationsbewegung der Zugstange um beide Achsen und einen Antriebsmotor aufweist. Der Antriebsmotor wird bei der Schwenkbewegung der Zugstange mitbewegt.

Es ist Aufgabe der vorliegenden Erfindung, eine weiter verbesserte Anhängevorrichtung aufzuzeigen.

Die Erfindung löst diese Aufgabe mit den Merkmalen im Hauptanspruch.
Die Befestigung des Antriebsmotors am Gestell hat verschiedene Vorteile. Einerseits wird die Leitungsführung und die Steuerung des Antriebsmotors vereinfacht und verbessert. Ferner ergeben sich eine günstigere Antriebskinematik und ein geringerer Bauaufwand. Es genügt ein einziger Antriebsmotor mit einer einzigen und bevorzugt drehenden Abtriebsachse, der platzsparend und geschützt in oder am Gehäuse der Antriebsvorrichtung untergebracht sein kann. Die gesamte Anhängevorrichtung kann kleiner bauen und lässt sich leichter und besser am Zugfahrzeug unterbringen. Zudem wird die Einrichtung zur Erzeugung der überlagerten Rotationsbewegung der Zugstange vereinfacht und deren Betriebssicherheit und Genauigkeit erhöht.

Die zweiachsige Bewegung der Zugstange um rotatorische Achsen mit Bewegungsüberlagerung hat Vorteile für die definierte Kinematik und die exakte Führung der Zugstangenbewegungen sowie für die Betriebssicherheit und die Verschleißarmut. Günstig ist hierbei auch die direkte Umsetzung einer drehenden Abtriebsbewegung des Antriebs in eine bevorzugt parallelachsige und ebenfalls drehende Zugstangenbewegung.

Eine Vereinfachung und Funktionsverbesserung ergibt sich außerdem für die Vorrichtung zur Verriegelung der Zugstange in einer oder beiden Endstellungen. Insbesondere kann die Drehsicherung für die Verriegelung der Zugstange in der ausgefahrenen Betriebsstellung vereinfacht und verbessert werden.

Die beanspruchte Anhängevorrichtung hat ferner den Vorteil, dass sich die im Anhängebetrieb auf die ausgefahrene Zugstange einwirkenden Kräfte und Belastungen besser und zuverlässiger aufnehmen und über das Gestell am Zugfahrzeug abstützen lassen. Auch die kinematische Zuordnung und das Zusammenwirken der bei der Zugstangenbewegung betätigten Antriebsteile sind eindeutiger und sind verbessert.

In den Unteransprüchen sind weitere vorteilhafte Ausgestaltungen der Erfindung angebeben.

Die Erfindung ist in den Zeichnungen beispielsweise und schematisch dargestellt. Im einzelnen zeigen:
- Figur 1:: eine perspektivische Darstellung der Anhängevorrichtung mit einer in Betriebsstellung ausgeschwenkten Zugstange,
- Figur 2:: die Anhängevorrichtung von Figur 1 in Ruhestellung mit eingeschwenkter Zugstange,
- Figur 3:: eine perspektivische Unteransicht der Anhängevorrichtung von Figur 1,
- Figur 4:: eine teilweise aufgebrochene perspektivische Darstellung des mechanischen Antriebs und der Einrichtung zur Erzeugung einer zumindest bereichsweise überlagerten Rotationsbewegung der Zugstange,
- Figur 5:: eine Darstellung der Anordnung von Figur 4 in Frontansicht,
- Figur 6:: eine andere perspektivische Darstellung des Antriebs und der Einrichtung zur Erzeugung einer zumindest bereichsweise überlagerten Rotationsbewegung der Zugstange,
- Figur 7 und 8:: eine teilweise abgebrochene Frontansicht der Anhängevorrichtung beim Einschwenken der Zugstange und in Ruhestellung,
- Figur 9 und 10:: eine teilweise geschnittene Draufsicht auf die Anhängevorrichtung und deren Verriegelungsvorrichtung in zwei Funktionszuständen,

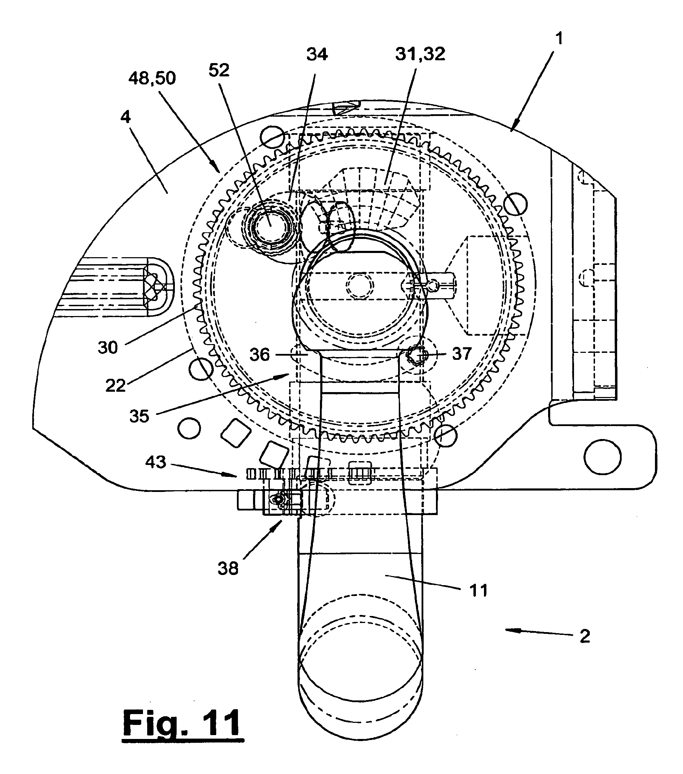

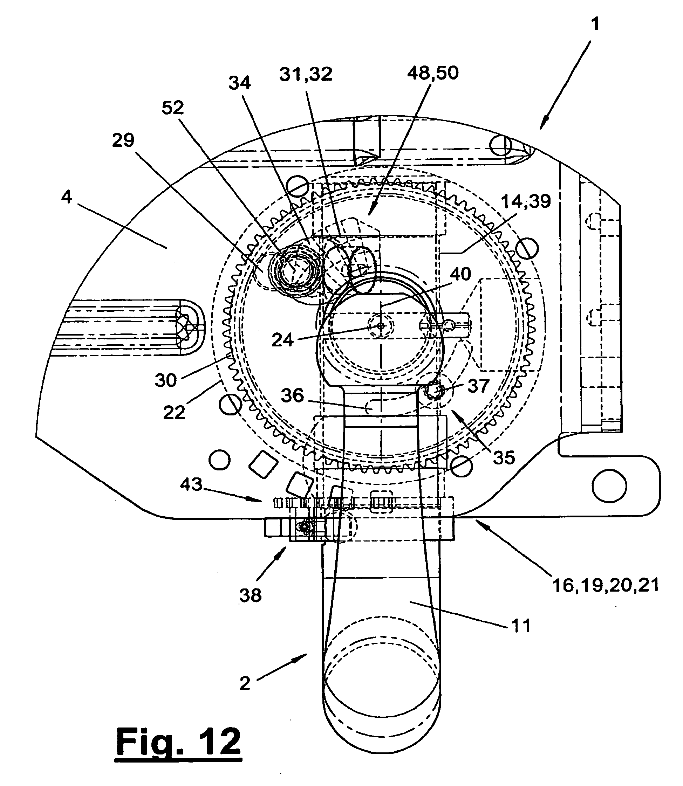

- Figur 11 und 12:: eine teilweise abgebrochene Frontansicht der Anhängevorrichtung und der Verriegelungsvorrichtung in den beiden Funktionsstellungen entsprechend Figur 9 und 10,
- Figur 13:: eine perspektivische Ansicht eines Treibelements
- Figur 14:: einen Längsschnitt durch einen Mitnehmer am Treibelement und
- Figur 15:: eine Variante der Anhängevorrichtung von Figur 1 in teilweise aufgebrochener Frontansicht.

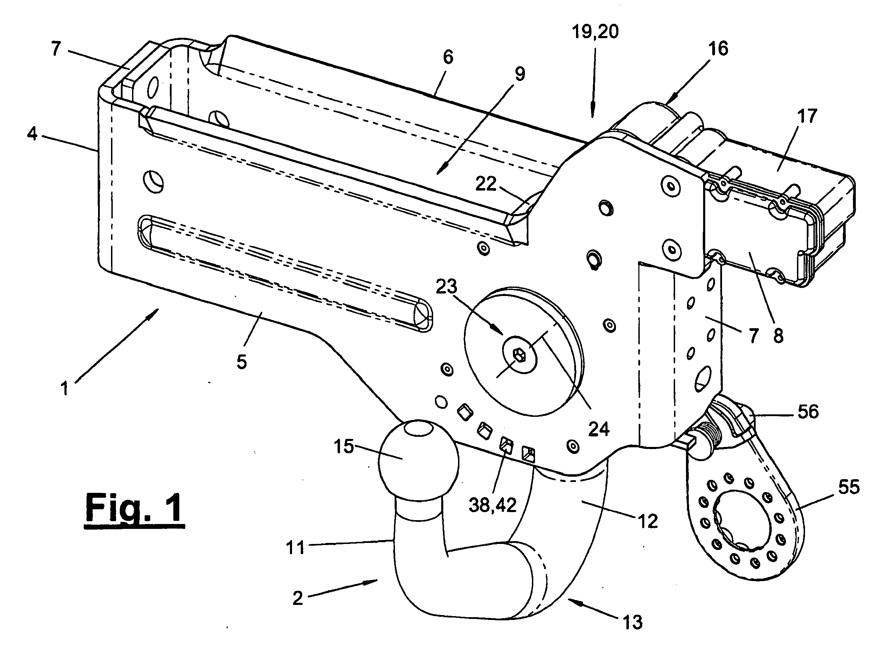

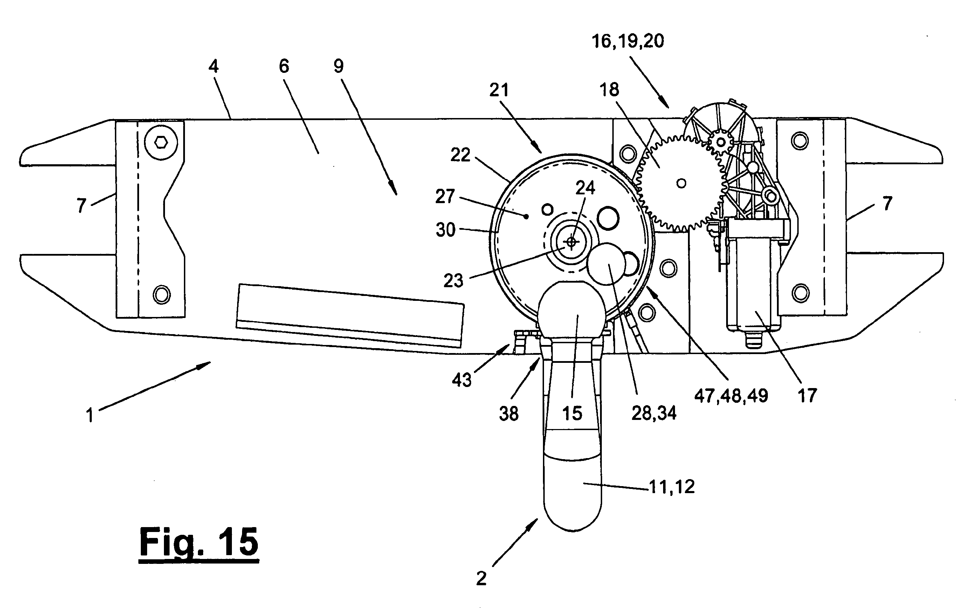

Figur 1 bis 3 zeigen eine Anhängevorrichtung (1) in verschiedenen Bewegungsstellungen und perspektivischen Ansichten. In Figur 15 ist eine Variante der Anhängevorrichtung (1) dargestellt.

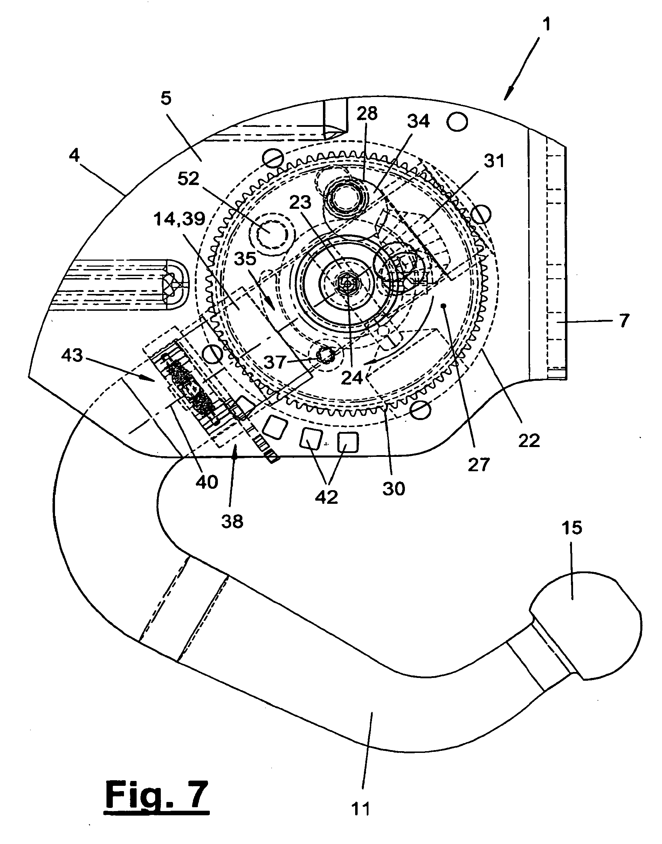

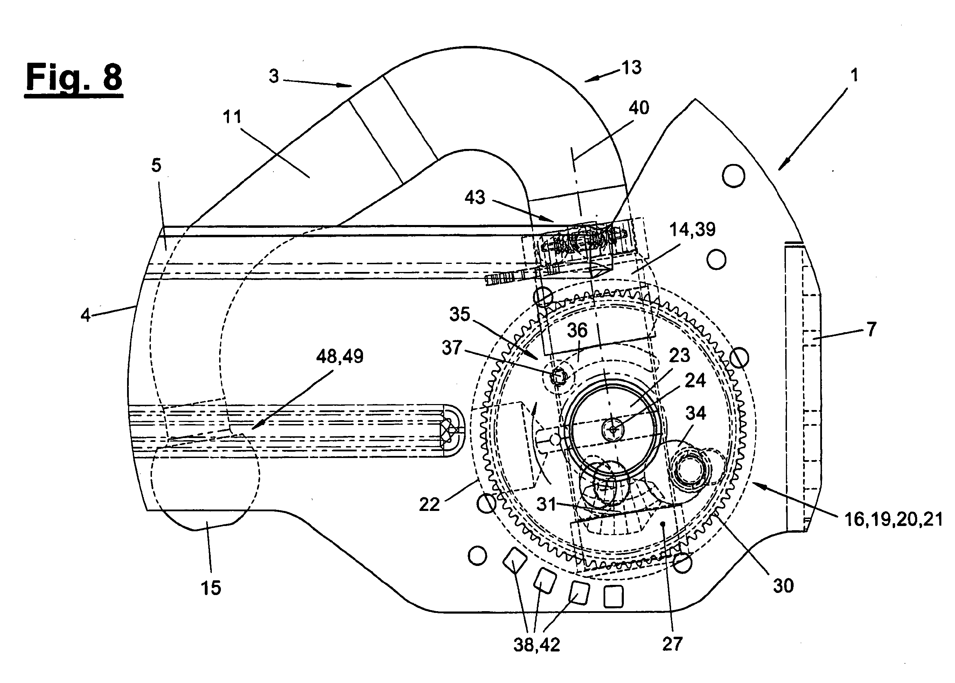

Die Anhängevorrichtung (1) ist einem nicht dargestellten Zugfahrzeug angeordnet und in einem Hohlraum des Fahrzeughecks verborgen untergebracht, welcher an der Unterseite einer Hecköffnung sitzt. Die Anhängevorrichtung (1) hat eine vorzugsweise zweifach oder im wesentlichen U-förmig gekrümmte Zugstange (11), die am freien hochragenden Ende des Stangenhalses (12) einen geeigneten Zugkopf (15), z.B. einen üblichen Kugelkopf, trägt. Die Zugstange (11) besteht vorzugsweise aus Metall, z.B. Stahl oder Leichtmetall. Der Stangenhals (12) geht nach einer ersten Krümmung (13) in einem schräg nach hinten abfallenden geraden Abschnitt und dann in ein weiteres und im wesentlichen gerades Stangenende (14) über, welches senkrecht oder schräg stehen kann. In der gezeigten Ausführungsform haben alle Teile des Stangenhalses (12) eine gemeinsame Hauptebene. Die Zugstangengeometrie ist in Figur 7 und 8 ersichtlich.

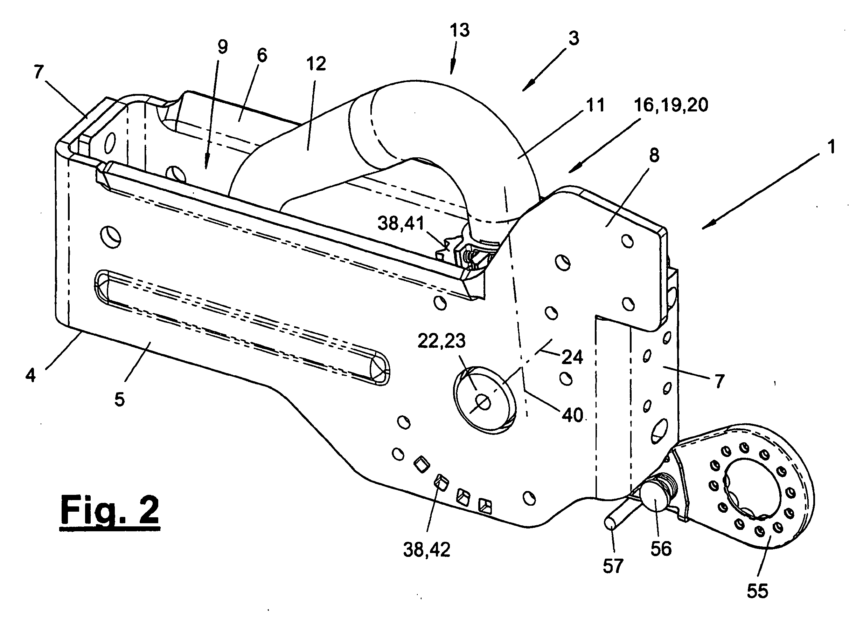

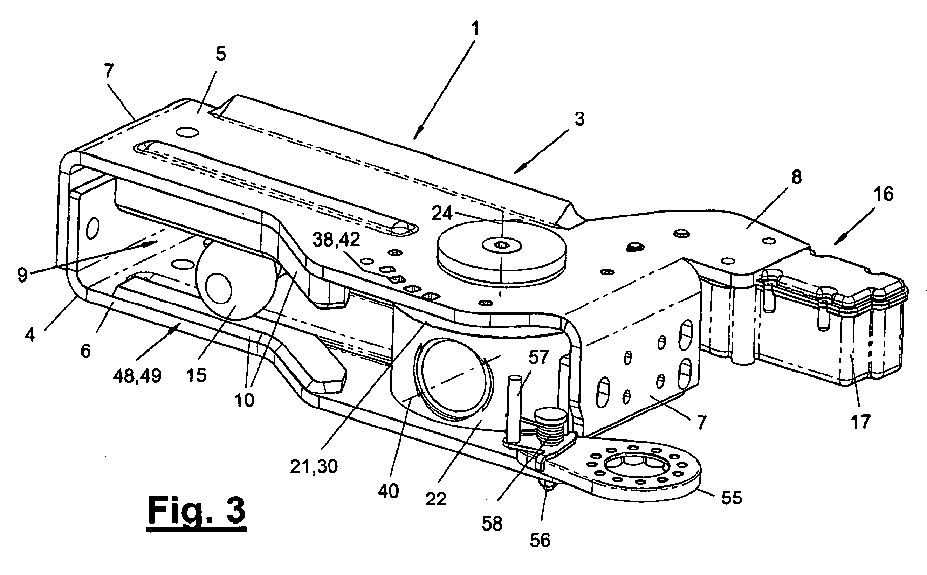

Figur 1 und 15 zeigen die Betriebsstellung (2) der Anhängevorrichtung (1), in der die ausgefahrene Zugstange (11) die vorbeschriebenen Stellungen und Ausrichtungen einnimmt und mit ihrem Kugelkopf (15) ankuppelbereit mit Abstand vor der Heckschürze positioniert ist. Figur 2 und 3 zeigen die eingefahrene Ruhestellung (3) der Zugstange (11), in der sie quer zur Fahrzeuglängsachse ausgerichtet ist und mit ihrer Krümmung (13) nach oben weist.

Die Kugelstange (11) ist z.B. zweiachsig kardanisch gelagert und besitzt zwei im wesentlichen senkrecht aufeinander stehende Dreh- und Schwenkachsen (24,40). Auf translatorische Achsen oder weitere Zusatzachsen für die Zugstangenbewegung wird verzichtet. Die Zugstange (11) wird von einem mechanischen Antrieb (16) zwischen der Betriebsstellung (2) und der Ruhestellung (3) hin und her bewegt, wobei sie nur Drehbewegungen ausführt.

Der mechanische Antrieb (16) ist bevorzugt ein Drehantrieb mit einer drehenden Abtriebsachse. Die Abtriebsachse kann parallel zur Schwenkachse (24) verlaufen. Die Drehbewegung der Abtriebsachse kann direkt in eine Rotationsbewegung der Zugstange (11) um die Schwenkachse (24) umgesetzt werden.

Der mechanische Antrieb (16) weist eine Einrichtung (19) zur Erzeugung einer zumindest bereichsweise überlagerten Rotationsbewegung der Zugstange (11) um ihre beiden rotatorischen Achsen (24,40) auf. Ferner umfasst der mechanische Antrieb (16) einen Antriebsmotor (17), der auf die besagte Einrichtung (19) einwirkt und vorzugsweise als Elektromotor, insbesondere als Getriebemotor mit Niederspannung ausgebildet sein kann. Er ist stationär an der Anhängevorrichtung (1) angeordnet und wird über eine geeignete Kabelanbindung von der Stromversorgung des Zugfahrzeugs mit Betriebsspannung und Steuersignalen versorgt.

Die Anhängevorrichtung (1) besitzt ferner eine nicht dargestellte Steuerung, die mit entsprechenden Bedienelementen für die Positionierung im Zugfahrzeug ausgerüstet oder mit solchen ggf. fahrzeugseitig bereits vorhandenen Bedienelementen verbunden ist. Die Anhängevorrichtung (1) kann hierdurch zwischen ihren Endstellungen (2,3) hin und her bewegt werden, wobei Kontrollleuchten oder dergl. die korrekte Funktion oder auch Fehlfunktionen anzeigen. Die Steuerung kann vom Fahrzeuginnenraum, alternativ aber auch von außen über eine z.B. drahtlose Fernbedienung.per Funk, Infrarot oder dergl. betätigt werden.

Ferner kann eine Leitungsverbindung mit einer Steckdose (nicht dargestellt) vorhanden sein, die an einem Steckdosenhalter (55) angeordnet ist. Der Steckdose werden die erforderliche Betriebsspannung sowie Signal- oder Steuerspannungen zugeleitet. Über die zentrale Steuerung der Anhängevorrichtung (1) können hierbei die genannten Ströme oder Spannungen an der Steckdose in Ruhestellung (3) abgeschaltet und in Betriebsstellung (2) aufgeschaltet werden. Bei den Schwenkbewegungen der Zugstange (11) wird auch der Steckdosenhalter (55) mitbewegt und zwischen einer zurückgezogenen Ruhestellung (3) und einer ausgefahrenen Betriebsstellung (2) hin und her bewegt.

Die Anhängevorrichtung (1) besitzt ein Gestell (4), welches z.B. als ein kastenartiges Gehäuse ausgebildet ist, welches einen innenliegenden Freiraum (9) umgibt und nach oben und unten offen ist. In den Freiraum (9) kann die Zugstange (11) bei der Bewegung in die Ruhestellung (3) eintauchen. Das Gestell (4) besteht z.B. aus zwei quer zur Fahrzeuglängsachse und zur Zugrichtung ausgerichteten Gestellwänden (5,6), die z.B. parallele Seitenwände bilden und an den Enden über quer gerichtete Stirnwände (7) miteinander verbunden sind. Die Gestellwände (5,6,7) bilden hierdurch ein im wesentlichen ringartiges oder mantelartiges Gehäuse. An den Stirnwänden (7) können adaptierbare Seitenteile der Anhängevorrichtung (nicht dargestellt) zur Verbindung mit dem Fahrzeugchassis befestigt, z.B. angeschraubt werden.

In der Ausführungsform von Figur 1 bis 5 ist an der einen Gestellwand, z.B. der in Fahrtrichtung hinteren Seitenwand (5) am oberen Rand eine wegragende Anbauplatte (8) angeordnet oder angeformt, an welcher der Antriebsmotor (17) befestigt werden kann. Das Gestell (4) kann aus einem beliebig geeigneten Material bestehen. Im gezeigten Ausführungsbeispiel besteht es aus zwei abgekanteten und im wesentlichen U-förmigen Metallblechen, die im Bereich der Stirnwände (7) in geeigneter Weise miteinander verbunden, z.B. genietet oder geschraubt sind.

Am unteren Bereich der Seitenwände (5,6) kann innenseitig eine Führung (10) für den hier eintauchenden und durchtretenden Stangenhals (12) vorhanden sein. Der lichte Abstand zwischen den Führungsleisten (10) kann kleiner als der Durchmesser des Zugkopfes (15) sein, so dass die Führungsleisten (10) zugleich einen Kugelanschlag (49) für die Zugstange (11) in der Ruhestellung (3) bilden können. Der Kugelanschlag (49) kann Bestandteil einer mehrteiligen Verrieglungsvorrichtung (48) sein, mit der die Zugstange (11) in den verschiedenen Endstellungen definierte und gesicherte Endlagen einnehmen kann. Der Kugelanschlag (49) wirkt hierbei in Verbindung mit einer Kraft- oder Momentenabschaltung des Antriebsmotors (17) in Verbindung mit einer Selbsthemmung des Antriebs.

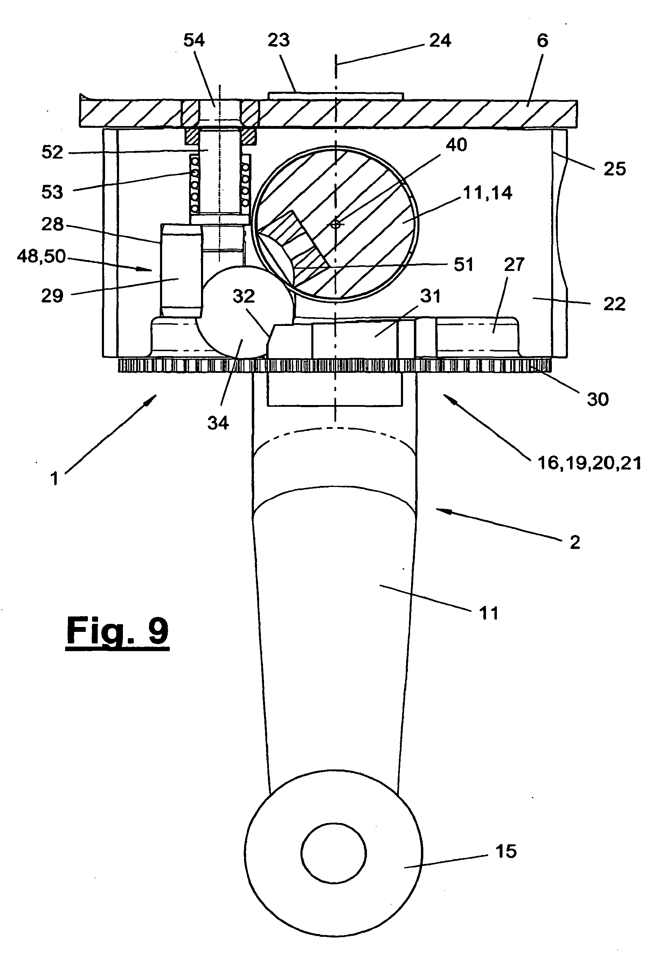

Die Einrichtung (19) zur Erzeugung einer zumindest bereichsweise überlagerten Rotationsbewegung weist einen Schwenkkörper (22) auf, der über ein Schwenklager (23) um eine quer zu den Seitenwänden (5,6) gerichtete Schwenkachse (24) schwenkbar am Gestell (4) gelagert ist. Im Schwenkkörper (22) ist die Zugstange (11) mit ihrem Zugstangenende (14) über ein Drehlager (39) um die Drehachse (40) drehbar gelagert. Figur 7 bis 10 zeigen diese Anordnung. Der Schwenkkörper (22) ist mit dem Antriebsmotor (17) antriebsmäßig gekoppelt. Die Einrichtung (19) weist ein die Schwenkachse (24) und die Drehachse (40) koppelndes Getriebe (20) auf. Die Lager (22,39) bilden die kardanische Lagerung der Zugstange (11) mit den sich im wesentlichen rechtwinklig kreuzenden rotatorischen Achsen (24,40).

Die Zugstange (11) kann um die Drehachse (40) einen Drehwinkel von im wesentlichen 90° und um die Schwenkachse (24) einen Schwenkwinkel von ca. 90° oder mehr, z.B. ca. 150° bis 190° ausführen. Die Zugstange (11) ist in Ruhestellung (3) längs des Gestells (4) ausgerichtet und im Freiraum (9) eingetaucht. In Betriebsstellung (2) ist die Zugstange (11) quer zum Gestell (4) und im wesentlichen in Fahrtrichtung ausgerichtet und weist mit ihrer Krümmung (13) nach unten.

Die Drehbewegung der Zugstange (11) um die Drehachse (40) wird von der Schwenkbewegung der Zugstange (11) oder des Schwenkkörpers (22) um die Schwenkachse (24) abgeleitet. Hierfür haben die Einrichtung (19) und das Getriebe (20) mehrere gekoppelte Getriebeteile (21,38). Die Schwenkbewegung und die Drehbewegung der Zugstange (11) überlappen sich zumindest teilweise.

Der Antriebsmotor (17) kann in der vorerwähnten Weise als Getriebemotor ausgebildet sein und ein integriertes oder vorgeschaltetes Untersetzungsgetriebe mit einem Abtriebselement (18) aufweisen, welches z.B. als stirnverzahntes flaches Abtriebszahnrad oder Ritzel ausgebildet ist. Das Ritzel (18) kämmt mit einem Treibelement (30), welches z.B. als stirnverzahntes und scheibenförmiges Zahnrad ausgebildet ist. Das Treibelement (30) bildet ein erstes Getriebeteil (21), welches als Schwenkgetriebe ausgestaltet ist.

Das Treibelement (30) ist mit dem Schwenkkörper (22) drehschlüssig verbunden und ist zugleich drehbar am Schwenkkörper (22) gelagert. Hierbei weist das Treibelement (30) einen Mitnehmer (31) auf, der auf ein am Schwenkkörper (22) angeordnetes Mitnahmeelement (34) schleppend einwirkt. Die vom Antriebsmotor (17) ausgelöste Drehbewegung des Treibelements oder Zahnrad (30) wird in beiden Drehrichtungen auf den Schwenkkörper (22) übertragen und nimmt diesen mit. Für die Mitnahme in Rückwärtsdrehrichtung ist ein nachfolgend erläuterter Freilauf (35) vorgesehen, über welchen das Treibelement (30) mit dem Schwenkkörper (22) verbunden ist.

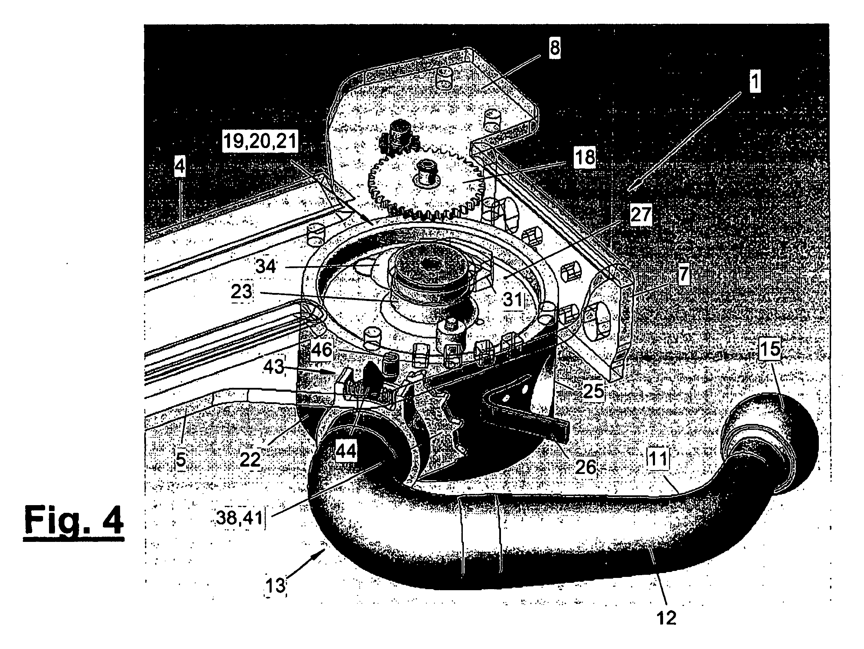

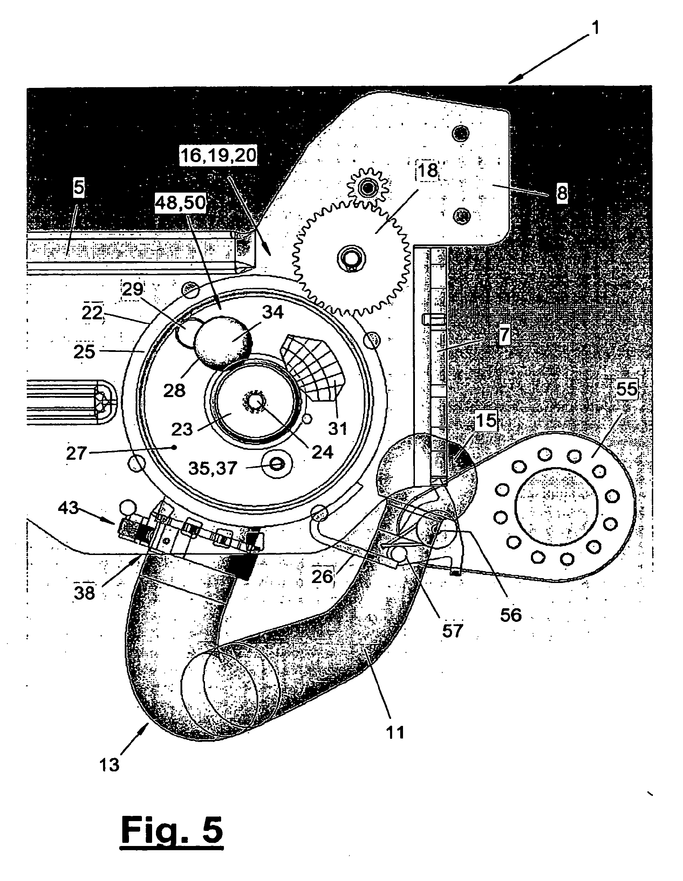

In Figur 4 und 5 ist der Schwenkkörper (22) ohne das Treibelement oder Zahnrad (30) dargestellt. Er besteht aus einem im wesentlichen zylindrischen und zur Schwenkachse (24) konzentrischen Gehäuse (25) mit zwei stirnseitigen Lagerfortsätzen zur Bildung der beidseitigen Drehlager (23) an ein oder beiden Seitenwänden (5,6). An der einen Stirnseite hat das Gehäuse (25) eine vertiefte Führungsbahn (27), die konzentrisch zur Schwenkachse (24) gebogen ist und die z.B. als kreisförmig umlaufende Führungsnut gestaltet ist. Die Führungsbahn (27) nimmt den seitlich am Treibelement (30) angeordneten Mitnehmer (31) auf. Nachdem der Mitnehmer (31) nur einen begrenzten Bogenwinkel um die Schwenkachse (24) ausführt, kann die Führungsbahn (27) eine entsprechend begrenzte Länge haben.

Am Boden der Führungsbahn (27) ist das Mitnahmeelement (34) drehfest gehalten und z.B. in einer dortigen quer gerichteten Aufnahmeöffnung (28) gehalten. Das Mitnahmeelement (34) ist z.B. als Kugel ausgebildet und kann sich in der Aufnahmeöffnung (28) quer zum Mitnahmeelement (31) und im wesentlichen längs der Schwenkachse (24) bewegen. Das Mitnahmeelement (34) kann Bestandteil einer nachfolgend erläuterten Drehsicherung (50) sein, die ihrerseits Teil einer Verriegelungsvorrichtung (48) sein kann.

Zum Ausschwenken der Zugstange (11) aus der in Figur 2 und 3 gezeigten Ruhestellung (3) dreht der Antriebsmotor (17) über das Ritzel (18) das Treibelement (30), welches sich entsprechend der Übersetzung um die Schwenkachse (24) dreht und mit seinem Mitnehmer (31) stirnseitig auf die in die Führungsbahn (27) ragende Kugel (34) einwirkt. Die Kugel (34) ist in diesem Fall in Querrichtung festgelegt, so dass der Mitnehmer (31) anschlägt und seine Drehbewegung auf die Kugel (34) überträgt und hierüber den Schwenkkörper (22) mit der Zugstange (11) in seiner Drehbewegung mitnimmt.

Das scheibenförmige Treibelement (30) ist gegenüber dem Schwenkkörper (22) und der Führungsbahn (27) abgedichtet und verschließt die Führungsbahn (27) nach außen. Das Treibelement (30) und das Ritzel (18) sind innenseitig am Gestell (4) und nahe an dessen Seitenwand (5) angeordnet. Das Treibelement (30) kann sich zu Lagerungszwecken durch die lagerseitige Öffnung in der Seitenwand (5) erstrecken und zugleich das Lagerauge für den Schwenkkörper (22) bilden. Ggf. ist das Treibelement (30) außerhalb der Seitenwand (5) wieder verbreitert oder mit einer Abdeckung versehen gemäß Figur 1.

Der Freilauf (35) dient zur Freigabe eines Zusatzweges des Treibelements (30) gegenüber dem in der Endstellung bzw. Betriebsstellung (2) stehenden Schwenkkörpers (22) für die Betätigung der Drehsicherung (50). Der Freilauf (35) dient außerdem für die Mitnahme des Schwenkkörpers (22) bei der Rückwärtsdrehung des Antriebs (16,17). Wie Figur 7, 8 und 13 verdeutlichen, besteht der Freilauf (35) aus einer konzentrisch zur Schwenkachse (24) gebogenen Führungsnut (36) und einen hier formschlüssig eingreifenden Führungsstift (37). In der gezeigten Anordnung ist der Führungsstift (37) dem Schwenkkörper (22) zugeordnet, wobei sich die Führungsnut (36) am Treibelement (30) befindet. Die Anordnung kann auch umgedreht sein. Die Bogenlänge der Führungsnut (36) ist begrenzt und entspricht dem Bogenweg, den der Mitnehmer (31) für die Verriegelungsfunktion gegenüber dem Mitnahmeelement (34) ausführen kann. Wie Figur 7 und 8 verdeutlichen, nimmt das Treibelement (30) bei der Rückwärtsdrehung mit seiner Führungsnut (36) den am rückwärtigen Nutende anschlagenden Führungsstift (37) mit und dreht hierdurch den Schwenkkörper (22) in Pfeilrichtung. Die Drehbewegung wird begrenzt durch den vorerwähnten Kugelanschlag (49).

Wie Figur 4, 7 und 8 verdeutlichen, ist das rückwärtige Stangenende (14) im Schwenkkörper (22) über das Drehlager (39) um die Drehachse (40) drehbar gehalten und geführt. Für eine axiale Halterung der Zugstange (11) kann eine Ringnut am Stangenende (14) vorhanden sein, in die ein am Gehäuse (25) gelagertes Stützelement (nicht dargestellt) lösbar eingreift. Die Zugstange (11) tritt über eine Öffnung im Gehäusemantel in das Innere des Schwenkkörpers (22) ein. So lange die Zugstange (11) sich mit ihrem nach außen vorstehenden Stangenhals (12) im Bereich des Gestells (4) befindet, ist sie seitlich an den Führungsleisten (10) geführt.

Das zweite Getriebeteil (38) der Einrichtung (19) bzw. des Getriebes (20) ist als Drehgetriebe ausgebildet und dient zum Drehen der Zugstange (11) um ihre Drehachse (40), was vorzugsweise am Ende der Schwenkbewegung des Schwenkkörpers (22) stattfindet. Das Getriebeteil (38) weist zwei zusammenwirkende Getriebeelemente (41,42) an der Zugstange (11) und am Gestell (4) auf. Das eine Getriebeelement (41) an der Zugstange (11) ist z.B. als im wesentlichen drehfester Zahnkranz und das andere Getriebeelement (42) am Gestell (4) als eine konzentrisch zur Schwenkachse (24) gebogene Reihe von Wandöffnungen ausgebildet. Die Zuordnung kann auch umgekehrt sein. Das zweite Getriebeteil (38) weist außerdem einen Auslöser (43) auf, der in Abhängigkeit von der Schwenkstellung des Schwenkkörpers (22) den Eingriff und Funktionsbeginn des Drehgetriebes (38) steuert.

Der Auslöser (43) weist z.B. einen mit der Zugstange (11) drehfest verbundenen Drehmitnehmer (44) auf, der mit einem gestellfesten Anschlag (46) zusammenwirkt. Der Zahnkranz (41) kann begrenzt elastisch gelagert sein und eine nach ein oder zwei Seiten wirksame federnde Abstützung (45) aufweisen, die sich ggf. am Drehmitnehmer (44) abstützt.

Figur 4 verdeutlicht die Funktion des Auslösers (43). Sobald die Zugstange (11) aus der Ruhestellung (3) soweit nach unten geschwenkt ist, dass sie nach unten aus dem Gestell (4) vorsteht und unter die Heckschürze oder ein anderes begrenzendes Heckteil des Zugfahrzeugs ragt, schlägt der Drehmitnehmer (44) an dem an der Seitenwand (5) befindlichen und nach innen vorstehenden Anschlag (46) an. Durch diesen Widerstand wird über die fortgesetzte Schwenkbewegung des Schwenkkörpers (22) die Zugstange (11) um ihre Drehachse (40) gedreht, wodurch die Zähne des Zahnkranzes (41) formschlüssig in die Wandöffnung (42) eingreifen und hier eine Abwälzbewegung durchführen. Die Zahn- und Öffnungsformen können eine Art Triebstockverzahnung bilden. Durch diese Abwälzbewegung wird die Zugstange (11) um einen definierten Drehwinkel von z.B. 90° gedreht und in die Betriebstellung (2) mit Längsausrichtung zur Fahrzeuglängsachse gebracht. Der Zahnkranz (41) kann im Bereich zwischen den relativ weit distanzierten Zähnen in Berührungskontakt mit der Seitenwand (5) kommen.

Die federnde Abstützung (45) sorgt bei Auftreten von Querkräften an der Zugstange (11) und insbesondere bei dynamischen Fahrbelastungen für eine begrenzte Nachgiebigkeit der Zugstange (11) um die Drehachse (40) und für eine verträgliche Aufnahme von Torsionskräften im Stangenhals (12).

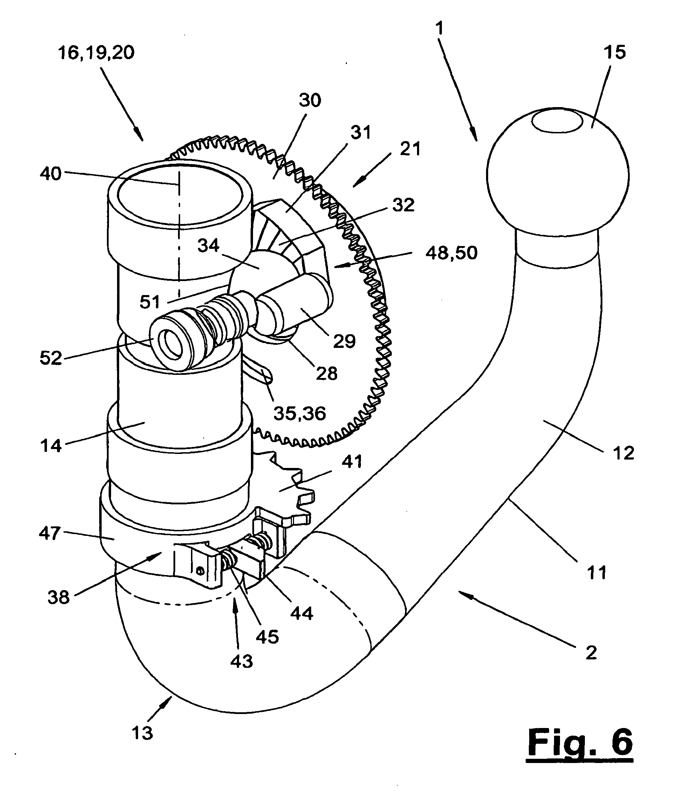

Beim Einschwenken der Zugstange (11) aus der Betriebsstellung (2) dreht das Drehgetriebe (38) die Zugstange (11) um ca. 90° zurück bis in eine Parallellage des Stangenhalses (12) bezügl. des Freiraums (9) bzw. der Führung (10), wobei der Zahnkranz (41) wieder außer Eingriff mit den Wandöffnungen (42) tritt. Der Zahnkranz (41) und die federnde Abstützung (45) können gemeinsam an einem Stützring (47) angeordnet sein, der auf das Stangenende (14) aufgezogen und dort in der gewünschten Winkelstellung bezüglich des stangenfesten Drehmitnehmers (44) angeordnet wird. Figur 6 zeigt diese Anordnung.

Die Drehsicherung (50) besteht aus dem erwähnten Mitnahmeelement (34), z.B. einem Wälzkörper, insbesondere einer Kugel, und einer Aufnahmemulde (51) am Stangenende (14) sowie einem Sperrelement (52). In der Aufnahmeöffnung (28) kann außerdem zur Aufnahme der hohen einwirkenden Kräfte ein aus gehärtetem Stahl bestehender Stützstift (29) angeordnet sein, der auch eine an die Kugelkrümmung angepasste axiale Führungsrinne für die Kugel (34) haben kann. Die Aufnahmemulde (51) ist auf die Abmessungen der Kugel (34) abgestimmt und kann einen hoch belastbaren und verschleißfesten Einsatz aus gehärtetem Stahl oder dgl. aufweisen.

Die Aufnahmemulde (51) befindet sich in einer solchen Drehlage am Stangenende (14), dass die Kugel (34) erst dann in die Aufnahmemulde (51) eintreten kann, wenn die Zugstange (11) ihre ausgeschwenkte Betriebsstellung (2) und ihre dortige Endlage einschließlich der vollendeten Drehbewegung um die Drehachse (40) eingenommen hat. Bevor diese Endstellung erreicht ist, stützt sich die Kugel (34) noch am beispielsweise zylindrischen Mantel des Stangenendes (14) ab und kann keine Querbewegungen und Ausweichbewegungen gegenüber dem Mitnehmer (31) ausführen. Sobald die besagte Endstellung (2) erreicht ist und der Schwenkkörper (22) und die Zugstange (11) nicht mehr weiter drehen bzw. schwenken können, was ebenfalls durch einen Anschlag begrenzt und definiert sein kann, dreht das Treibelement (30) über den Freilauf (35) noch ein Stück weiter. Der mit einer Kurvenbahn (32) versehene Mitnehmer (31) gleitet dabei auf der Kugel (34) auf und drückt diese durch die Aufnahmeöffnung (28) in die Aufnahmemulde oder Kugelaufnahme (51). Hierbei drückt die Kugel (34) gegen das Sperrelement (52), welches z.B. als Sperrbolzen mit einer rückstellenden Feder (53) ausgebildet ist und schiebt den Sperrbolzen (52) in eine passende Gegenöffnung (54) an der rückwärtigen Seitenwand (6) des Gestells (4). Das Sperrelement (52) ist im Schwenkkörper (22) gleitend längs der Schwenkachse (24) geführt und gelagert.

In dieser Endstellung schaltet der Antriebsmotor (17) wiederum über eine Kraft- oder Momentenabschaltung ab. Durch die Selbsthemmung des Schwenkgetriebes (21) bleibt diese Endstellung fixiert. Der Sperrstift (52) verhindert eine Schwenkbewegung des Schwenkkörpers (22) und der Zugstange (11) um die Schwenkachse (24). Die vom Mitnehmer (31) an der Rückseite blockierte Kugel (34) sperrt ihrerseits über die formschlüssige Aufnahme in der Kugelaufnahme (51) eine Drehbewegung um die Drehachse (40) so dass das Stangenende (14) in der Betriebsstellung (2) fest eingespannt ist. Etwaige über den Zugkopf (15) eingeleitete Querkräfte können über innere Verformungen des Stangenhalses (12) und insbesondere eine Torsionsverformung des endseitig eingespannten Stangenendes (14) zerstörungsfrei aufgenommen werden, wobei über die vorerwähnte federnde Abstützung (45) das Drehgetriebe (38) entlastet ist.

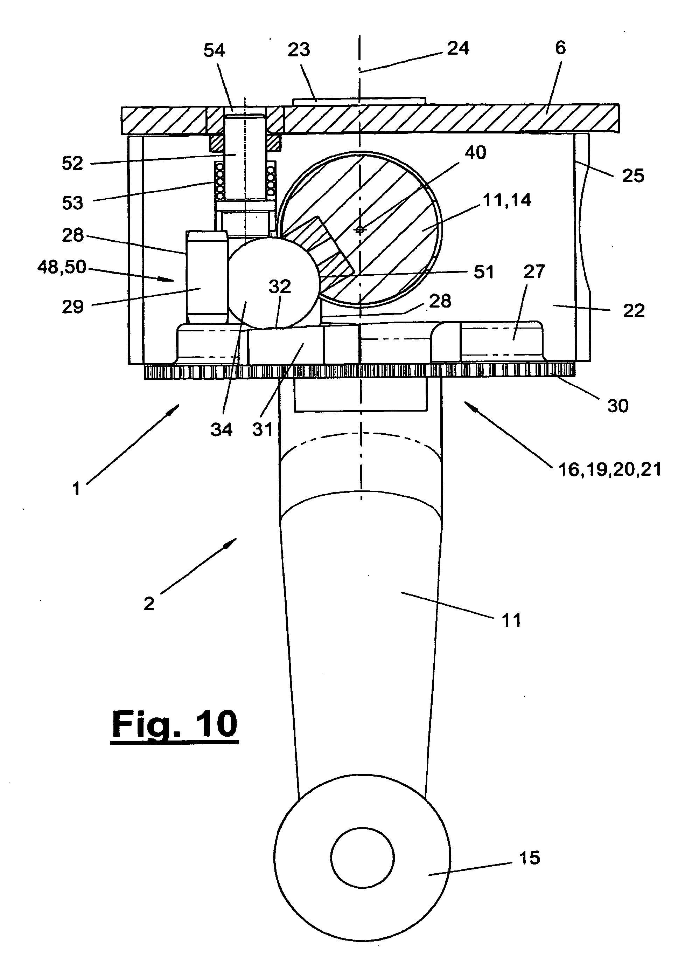

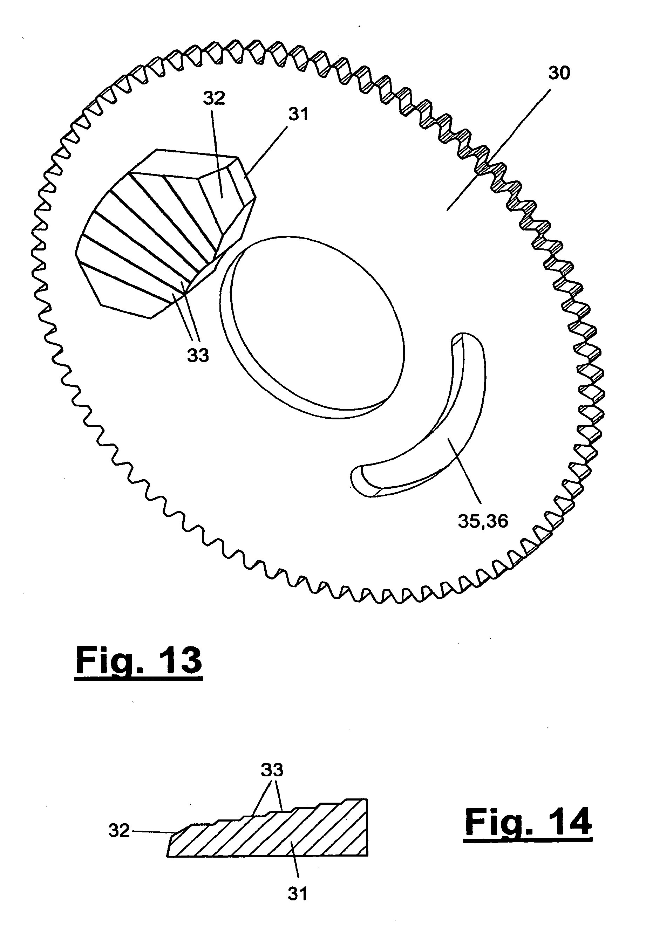

Wie Figur 13 und 14 verdeutlichen, besteht die Kurvenbahn oder Kulissenbahn (32) des Mitnehmers (31) aus einem angeschrägten Vorderende, mit dem der Mitnehmer (31) schräg über die Kugel (34) greifen und dies zum Ausschwenken der Zugstange (11) vor sich her schieben bzw. zum verriegeln in die Aufnahmeöffnung (28) drücken kann. Beim Verriegeln gleitet der Mitnehmer (31) mit seiner ebenfalls im wesentlichen schrägen Oberseite über die Kugel (34) und hält diese in der in Figur 10 gezeigten Sperrstellung fest. Die Kurvenbahn (32) kann an der Oberseite eine Stufenform (33) aufweisen, die aus mehreren Ebenen und mit schrägen Übergängen gestuft angeordneten Plateaus besteht, die im wesentlichen quer zur Aufnahmeöffnung (28) und zur Bewegungsrichtung der Kugel (34) ausgerichtet sind. Hierdurch werden rückstellende Querkräfte auf dem Mitnehmer (31) und den Antrieb (16) verhindert und eine sichere Blockierung der Kugel (34) in der Sperrstellung gewährleistet.

Beim Zurückdrehen des Antriebs (16) dreht das Treibelement (30) mit dem Mitnehmer (31) in Gegenrichtung und gibt die Kugel (34) frei, welche unter der rückstellenden Federkraft des Sperrbolzens (52) und durch die rückdrehende Bewegung des Stangenendes (14) um die Drehachse (40) aus der Sperrstellung ausgeschoben und anschließend wieder am Mantel des Stangenendes (14) abgestützt wird. Über den Freilauf (35) wird in der vorerwähnten Weise der Schwenkkörper (22) mitgenommen, wobei die Zugstange (11) über das Drehgetriebe (38) in ihre Ausgangsstellung zurückdreht und in die Ruhestellung (3) geschwenkt wird.

Zur Betätigung des beweglich und z.B. schwenkbar am Gestell (4) gelagerten Steckdosenhalters (55) kann am Schwenkkörper (22) ein hakenförmiges Schleppelement (26) angeordnet sein, welches gemäß Figur 5 einen Mitnehmer (57) mitschleppt, der jenseits eines Schwenklagers (56) angeordnet ist und gegen die rückstellende Wirkung einer Feder (58) den Steckdosenhalter (55) in die Betriebsstellung (2) ausschwenkt. Die Feder (58) dreht den Steckdosenhalter (55) beim Einschwenken der Zugstange (11) zurück in die Ruhelage (3).

Figur 15 zeigt eine Variante der Anhängevorrichtung (1) von Figur 1 bis 5. Die beiden Ausführungsformen stimmen hinsichtlich der Zugstangenkinematik und der grundsätzlichen konstruktiven Ausbildung weitestgehend überein. Die Variante von Figur 15 weist gegenüber der ersten Ausführungsform einige konstruktive Änderungen auf. In der Zeichnung von Figur 15 ist die vordere Gestellwand (5) der Übersicht halber weggelassen und nur die hintere Gestellwand (6) dargestellt, wobei die Stirnwände (7) als abgekantete Wandprofile ausgebildet und dargestellt sind. In dieser Ausführungsform kann das Gestell (4) über ein oder beide Seitenwände (5,6) mit der Fahrzeugkarosserie verbunden werden.

In der Variante von Figur 15 ist der Motor 17 innerhalb des Gestells (4) angeordnet. Er kann dabei die gezeigte stehende oder vertikale Anordnung haben und treibt über ein entsprechend ausgebildetes Vorgelege das Abtriebselement (18), welches entsprechend des ersten Ausführungsbeispiels von Figur 1 bis 3 ausgebildet und gelagert ist.

In der Variante von Figur 15 befinden sich die Aufnahmeöffnung (28) und das Mitnahmeelement (34) in der gezeigten Betriebsstellung (2) unterhalb der Schwenkachse (24), wobei auch die anderen Teile der Verriegelungsvorrichtung (47), des Kugelanschlags (49) und der Kugelaufnahme (50) entsprechend anders positioniert sind. In der Ausführungsform von Figur 1 bis 5 sind die Aufnahmeöffnung (28) und das Mitnahmeelement (34) oberhalb der Schwenkachse (24) angeordnet. Die Ausgestaltung von Figur 15 hat demgegenüber Vorteile für die Momentenaufnahme. Außerdem kann beim Drehmitnehmer (43) die Feder an der Abstützung (44) zu Gunsten einer starren Abstützung entfallen.

Abwandlungen der gezeigten und beschriebenen Ausführungsformen sind in verschiedener Weise möglich. Dies betrifft die Anordnung und Ausbildung des Antriebs (16) mit dem Antriebsmotor (17) und dem Getriebe (20) sowie dessen Getriebeteilen (21,38). Auch das Gestell (4) sowie der Schwenkkörper (22) und die Zugstange (11) können in anderer Weise ausgebildet sein. Gleiches gilt für die Verriegelungsvorrichtung (48) und den ggf. mitbewegten Steckdosenhalter (55).

### BEZUGSZEICHENLISTE

- 1: Anhängevorrichtung
- 2: Betriebsstellung
- 3: Ruhestellung
- 4: Gestell
- 5: Gestellwand, Seitenwand
- 6: Gestellwand, Seitenwand
- 7: Gestellwand, Stirnwand
- 8: Anbauplatte
- 9: Freiraum
- 10: Führung, Führungsleiste
- 11: Zugstange
- 12: Stangenhals
- 13: Krümmung
- 14: Stangenende
- 15: Zugkopf, Kugelkopf
- 16: Antrieb
- 17: Antriebsmotor
- 18: Abtriebselement, Abtriebszahnrad, Ritzel
- 19: Einrichtung für überlagerte Rotationsbewegung
- 20: Getriebe
- 21: Getriebeteil, Schwenkgetriebe
- 22: Schwenkkörper
- 23: Schwenklager
- 24: Schwenkachse
- 25: Gehäuse
- 26: Schleppelement
- 27: Führungsbahn, Führungsnut
- 28: Aufnahmeöffnung
- 29: Stützstift
- 30: Treibelement, Zahnrad
- 31: Mitnehmer
- 32: Kurvenbahn, Kulissenbahn
- 33: Stufenform, gestufte Plateaus
- 34: Mitnahmeelement, Kugel
- 35: Freilauf
- 36: Führungsnut
- 37: Führungsstift
- 38: Getriebeteil, Drehgetriebe
- 39: Drehlager
- 40: Drehachse
- 41: Getriebeelement an Zugstange, Zahnkranz
- 42: Getriebeelement an Gestell, Wandöffnung
- 43: Auslöser
- 44: Drehmitnehmer
- 45: federnde Abstützung
- 46: Anschlag
- 47: Stützring
- 48: Verriegelungsvorrichtung
- 49: Kugelanschlag
- 50: Drehsicherung
- 51: Kugelaufnahme, Aufnahmemulde
- 52: Sperrelement, Sperrbolzen
- 53: Feder
- 54: Gegenöffnung
- 55: Steckdosenhalter
- 56: Schenklager
- 57: Mitnehmer
- 58: Feder

## Patentansprüche

1. Anhängevorrichtung für Zugfahrzeuge, bestehend aus einer Zugstange (11), die nur um zwei rotatorische Achsen (24,40) beweglich an einem Gestell (4) der Anhängevorrichtung (1) gelagert ist und aus einem mechanischen Antrieb (16) zur Bewegung der Zugstange (11) zwischen einer Betriebsstellung (2) und einer Ruhestellung (3), wobei der Antrieb (16) einen Antriebsmotor (17) und eine Einrichtung (19) zur Erzeugung einer zumindest bereichsweise überlagerten Rotationsbewegung der Zugstange (11) um beide Achsen (24,40) aufweist, wobei der Antriebsmotor (17) am Gestell (4) angeordnet und befestigt ist,
wobei die Einrichtung (19) einen Schwenkkörper (22) aufweist, der mit einem Schwenklager (23) schwenkbar am Gestell (4) gelagert ist und in dem die Zugstange (11) drehbar gelagert (39) ist,
wobei die Einrichtung (19) ein die Schwenkachse (24) und die Drehachse (40) koppelndes Getriebe (20) aufweist, wobei die Drehbewegung der Zugstange (11) um die Drehachse (40) von der Schwenkbewegung der Zugstange (11) oder des Schwenkkörpers (22) abgeleitet ist und
wobei der Antriebsmotor (17) auf ein erstes Getriebeteil (21) einwirkt, welches als Schwenkgetriebe ausgebildet ist und ein mit dem Antriebsmotor (17) verbundenes Abtriebselement (18), vorzugsweise ein Ritzel, und ein damit im Eingriff stehendes und mit dem Schwenkkörper (22) drehschlüssig verbundenes Treibelement (30), insbesondere ein Stirnverzahntes Zahnrad, aufweist.

2. Vorrichtung nach Anspruch 1, **dadurch gekennzeichnet, dass** die Zugstange (11) eine kardanische Lagerung mit einem Schwenklager (23) und einem Drehlager (39) mit sich im wesentlichen rechtwinklig kreuzenden rotatorischen Achsen (24,40) aufweist.

3. Vorrichtung nach Anspruch 1 oder 2, **dadurch gekennzeichnet, dass** die Zugstange (11) eine gekrümmte Form aufweist und mit ihrem einen Stangenende (14) um eine in Betriebsstellung (2) im wesentlichen vertikale Drehachse (40) und um eine im wesentlichen in Fahrzeuglängsrichtung liegende Schwenkachse (24) rotierbar gelagert ist.

4. Vorrichtung nach Anspruch 1, 2 oder 3, **dadurch gekennzeichnet, dass** die Zugstange (11) um die Drehachse (40) einen Drehwinkel von im wesentlichen 90° und um die Schwenkachse (24) einen Schwenkwinkel von ca. 90° oder mehr, vorzugsweise ca. 150°-190° aufweist.

5. Vorrichtung nach Anspruch 3 oder 4, **dadurch gekennzeichnet, dass** die Zugstange (11) in Ruhestellung (3) längs des Gestells (4) ausgerichtet ist und in einem Freiraum (9) des Gestells (4) eintaucht, wobei die Zugstange (11) mit ihrer Krümmung (13) nach oben weist.

6. Vorrichtung nach einem der vorhergehenden Ansprüche, **dadurch gekennzeichnet, dass** das Treibelement (30) scheibenförmig ausgebildet ist.

7. Vorrichtung nach einem der vorhergehenden Ansprüche, **dadurch gekennzeichnet, dass** das Treibelement (30) drehbar am Schwenkkörper (22) gelagert ist, wobei das Treibelement (30) einen Mitnehmer (31) aufweist, der auf ein am Schwenkkörper (22) angeordnetes Mitnahmeelement (34) schleppend einwirkt.

8. Vorrichtung nach einem der vorhergehenden Ansprüche, **dadurch gekennzeichnet, dass** das Treibelement (30) über einen Freilauf (35) mit dem Schwenkkörper (22) verbunden ist.

9. Vorrichtung nach einem der Ansprüche 5 bis 8, **dadurch gekennzeichnet, dass** das Gestell (4) als kastenartiges, den Freiraum (9) umgebendes sowie nach oben und unten offenes Gehäuse ausgebildet ist, an dem der Schwenkkörper (22), der Antriebsmotor (17) und ein Steckdosenhalter (55) gelagert sind.

10. Vorrichtung nach einem der vorhergehenden Ansprüche, **dadurch gekennzeichnet, dass** ein zweites Getriebeteil (38) mit zusammenwirkenden Getriebeelementen (41,42) an der Zugstange (11) und am Gestell (4) vorgesehen ist, welches die Schwenkbewegung des Schwenkkörpers (22) in eine Drehbewegung der Zugstange (11) um die Drehachse (40) umsetzt.

11. Vorrichtung nach Anspruch 10, **dadurch gekennzeichnet, dass** das eine Getriebeelement (41) an der Zugstange (11) als im wesentlichen drehfester Zahnkranz und das andere Getriebeelement (42) am Gestell (4) als eine gebogene Reihe von Wandöffnungen ausgebildet ist.

12. Vorrichtung nach Anspruch 11, **dadurch gekennzeichnet, dass** das Getriebeelement (41) an der Zugstange (11) eine federnde Abstützung (45) aufweist.

13. Vorrichtung nach Anspruch 10, 11 oder 12, **dadurch gekennzeichnet, dass** das zweite Getriebeteil (38) einen Auslöser (43) aufweist.

14. Vorrichtung nach Anspruch 13, **dadurch gekennzeichnet, dass** der Auslöser (43) einen mit der Zugstange (11) drehfest verbundenen Drehmitnehmer (44) aufweist, der mit einem gestellfesten Anschlag (46) zusammenwirkt.

15. Vorrichtung nach einem der Ansprüche 7 bis 13, **dadurch gekennzeichnet, dass** die Anhängevorrichtung (1) eine Verriegelungsvorrichtung (48) mit einer Drehsicherung (50) für die Verriegelung der Zugstange (11) in der ausgefahrenen Betriebsstellung (2) aufweist, die aus dem Mitnahmeelement (34), z.B. einem Wälzkörper, insbesondere einer Kugel, und einer Aufnahmemulde (51) am Stangenende (14) sowie einem Sperrelement (52) besteht.

16. Vorrichtung nach Anspruch 15, **dadurch gekennzeichnet, dass** die Drehsicherung (50) ein vom beweglich gehaltenen Mitnahmeelement (34) betätigbares und mit dem Gestell (4) in Sperreingriff bringbares Sperrelement (52) aufweist.

17. Vorrichtung nach Anspruch 15 oder 16, **dadurch gekennzeichnet, dass** der Stangenhals (12) eine Aufnahmemulde (51) aufweist, in welche das Mitnahmeelement (34) am Ende der Drehbewegung der Zugstange (11) unter Einwirkung des Mitnehmers (31) eintaucht.

18. Vorrichtung nach einem der Ansprüche 15, 16 oder 17, **dadurch gekennzeichnet, dass** die Anhängevorrichtung (1) eine mehrteilige Verriegelungsvorrichtung (48) mit einem Kugelanschlag (49) am Gestell (4) aufweist, wobei die Zugstange (11) mit der Verrieglungsvorrichtung (48) in den verschiedenen Endstellungen definierte und gesicherte Endlagen einnehmen kann.

19. Vorrichtung nach einem der Ansprüche 15 bis 18, **dadurch gekennzeichnet, dass** der Freilauf (35) des Treibelements (30) zur Betätigung der Drehsicherung (50) am Ende der Schwenk- und Drehbewegung der Zugstange (11) und zur Rückholung des Schwenkkörpers (22) vorgesehen ist.

20. Vorrichtung nach einem der Ansprüche 8 bis 19, **dadurch gekennzeichnet, dass** der Freilauf (35) eine gebogene Führungsnut (36) am Treibelement (30) und einen dort eingreifenden Führungsstift (37) am Schwenkkörper (22) aufweist.

21. Vorrichtung nach einem der Ansprüche 7 bis 20, **dadurch gekennzeichnet, dass** der Mitnehmer (31) am Treibelement (30) in eine Führungsbahn (27) am Schwenkkörper (22) ragt, wobei das vorstehende Mitnahmeelement (34) in einer Aufnahmeöffnung (28) an der Führungsbahn (27) querbeweglich gehalten und bis zum Ende der Schwenk- und Drehbewegung der Zugstange (11) am Stangenhals (12) abgestützt ist.

22. Vorrichtung nach einem der Ansprüche 7 bis 21, **dadurch gekennzeichnet, dass** der Mitnehmer (31) als Kulissenstein ausgebildet ist und eine Kurvenbahn (32) zum Aufgleiten auf dem eintauchenden Mitnahmeelement (34) aufweist.

23. Vorrichtung nach Anspruch 22, **dadurch gekennzeichnet, dass** die Kurvenbahn (32) an der Oberseite eine Stufenform (33) aufweist.

24. Vorrichtung nach einem der Ansprüche 21, 22 oder 23, **dadurch gekennzeichnet, dass** das Sperrelement (52) am Ende der Aufnahmeöffnung (28) angeordnet ist und mit einer Gegenöffnung (54) am Gestell (4) in formschlüssigen Eingriff bringbar ist.

25. Vorrichtung nach einem der Ansprüche 15 bis 24, **dadurch gekennzeichnet, dass** das Sperrelement (52) als federbelasteter (53) Sperrbolzen ausgebildet ist.

26. Vorrichtung nach einem der Ansprüche 21 bis 25, **dadurch gekennzeichnet, dass** die Aufnahmeöffnung (28) einen seitlichen Stützstift (29) zur Führung des Mitnahmeelements (34) bei der Querbewegung aufweist.

27. Vorrichtung nach einem der Ansprüche 9 bis 26, **dadurch gekennzeichnet, dass** der Steckdosenhalter (55) schwenkbar am Gestell (4) gelagert (56) ist und durch einen Mitnehmer (57) am Schwenkkörper (22) betätigbar ist.

## Claims

1. Towing device for traction vehicles, consisting of a tow-bar (11) which is mounted on a frame (4) of the towing device (1) so as to be movable only about two rotary axes (24, 40), and of a mechanical drive (16) for moving the tow-bar (11) between an operating position (2) and an inoperative position (3), wherein the drive (16) has a driving motor (17) and a device (19) for producing a rotational movement of the tow-bar (11) about the two axes (24, 40), said rotational movement being combined at least in regions, wherein the driving motor (17) is arranged and fastened on the frame (4), wherein the device (19) has a pivoting body (22) which is mounted pivotably on the frame (4) by means of a pivot bearing (23) and in which the tow-bar (11) is rotatably mounted (39), wherein the device (19) has a gearing (20) coupling the pivot axis (24) and the axis of rotation (40), wherein the rotational movement of the tow-bar (11) about the axis of rotation (40) is derived from the pivoting movement of the tow-bar (11) or of the pivoting body (22), and wherein the driving motor (17) acts on a first gearing part (21) which is designed as a pivoting gearing and has an output element (18), preferably a pinion, which is connected to the driving motor (17), and a drive element (30), in particular a spur-toothed gearwheel, which is in engagement with said output element and is connected in a rotationally locked manner to the pivoting body (22).

2. Device according to Claim 1, **characterized in that** the tow-bar (11) has a cardanic mounting with a pivot bearing (23) and a rotary bearing (39) having rotary axes (24, 40) which intersect substantially at right angles.

3. Device according to Claim 1 or 2, **characterized in that** the tow-bar (11) has a curved shape and is mounted rotatably at one bar end (14) thereof about an axis of rotation (40) which is substantially vertical in the operating position (2) and about a pivot axis (24) which lies substantially in the longitudinal direction of the vehicle.

4. Device according to Claim 1, 2 or 3 **characterized in that** the tow-bar (11) has an angle of rotation about the axis of rotation (40) of substantially 90°, and a pivot angle about the pivot axis (24) of approx. 90° or more, preferably approx. 150°-190°.

5. Device according to Claim 3 or 4, **characterized in that**, in the inoperative position (3), the tow-bar (11) is oriented along the frame (4) and enters a clearance (9) of the frame (4), wherein the curvature (13) of the tow-bar (11) faces upwards.

6. Device according to one of the preceding claims, **characterized in that** the drive element (30) is of disk-shaped design.

7. Device according to one of the preceding claims, **characterized in that** the drive element (30) is mounted rotatably on the pivoting body (22), wherein the drive element (30) has a driver (31) which acts in dragging manner on a carry-along element (34) arranged on the pivoting body (22).

8. Device according to one of the preceding claims, **characterized in that** the drive element (30) is connected to the pivoting body (22) via a freewheel (35).

9. Device according to one of Claims 5 to 8, **characterized in that** the frame (4) is designed as a box-like housing which surrounds the clearance (9), is open upwards and downwards and on which the pivoting body (22), the driving motor (17) and a socket holder (55) are mounted.

10. Device according to one of the preceding claims, **characterized in that** a second gearing part (38) with interacting gearing elements (41, 42) on the tow-bar (11) and on the frame (4) is provided, the gearing part converting the pivoting movement of the pivoting body (22) into a rotational movement of the tow-bar (11) about the axis of rotation (40).

11. Device according to Claim 10, **characterized in that** the one gearing element (41) on the tow-bar (11) is designed as a substantially rotationally fixed toothed rim and the other gearing element (42) on the frame (4) is designed as an arcuate row of wall openings.

12. Device according to Claim 11, **characterized in that** the gearing element (41) on the tow-bar (11) has a resilient support (45).

13. Device according to Claim 10, 11 or 12, **characterized in that** the second gearing part (38) has a trigger (43).

14. Device according to Claim 13, **characterized in that** the trigger (43) has a rotary driver (44) which is connected to the tow-bar (11) for conjoint rotation and interacts with a stop (46) mounted on the frame.

15. Device according to one of Claims 7 to 13, **characterized in that** the towing device (1) has a locking device (48) with a rotation-prevention means (50) for locking the tow-bar (11) in the extended operating position (2), said rotation-prevention means consisting of the carry-along element (34), for example a rolling body, in particular a ball, and a receiving trough (51) at the bar end (14) and also a blocking element (52).

16. Device according to Claim 15, **characterized in that** the rotation-prevention means (50) has a blocking element (52) which is actuable by the moveably held carry-along element (34) and can be brought into blocking engagement with the frame (4).

17. Device according to Claim 15 or 16, **characterized in that** the bar neck (12) has a receiving trough (51) which is entered by the carry-along element (34) at the end of the rotational movement of the tow-bar (11) under the effect of the driver (31).

18. Device according to one of Claims 15, 16 and 17, **characterized in that** the towing device (1) has a multi-part locking device (48) with a spherical stop (49) on the frame (4), wherein the tow-bar (11) can take up defined and secured final positions in the various end positions by means of the locking device (48).

19. Device according to one of Claims 15 to 18, **characterized in that** the freewheel (35) of the drive element (30) is provided for actuating the rotation-prevention means (50) at the end of the pivoting and rotational movement of the tow-bar (11) and for retrieving the pivoting body (22).

20. Device according to one of Claims 8 to 19, **characterized in that** the freewheel (35) has an arcuate guide groove (36) on the drive element (30) and a guide pin (37), which engages there, on the pivoting body (22).

21. Device according to one of Claims 7 to 20, **characterized in that** the driver (31) on the drive element (30) protrudes into a guide track (27) on the pivoting body (22), wherein the protruding carry-along element (34) is held in a transversely moveable manner in a receiving opening (28) on the guide track (27) and is supported on the bar neck (12) up to the end of the pivoting and rotational movement of the tow-bar (11).

22. Device according to one of Claims 7 to 21, **characterized in that** the driver (31) is designed as a sliding block and has a curved path (32) for sliding on the entering carry-along element (34).

23. Device according to Claim 22, **characterized in that** the curved path (32) has a stepped shape (33) on the upper side.

24. Device according to one of Claims 21, 22 and 23, **characterized in that** the blocking element (52) is arranged at the end of the receiving opening (28) and can be brought into form-fitting engagement with a mating opening (54) on the frame (4).

25. Device according to one of Claims 15 to 24, **characterized in that** the blocking element (52) is designed as a spring-loaded (53) blocking bolt.

26. Device according to one of Claims 21 to 25, **characterized in that** the receiving opening (28) has a lateral supporting pin (29) for guiding the carry-along element (34) during the transverse movement.

27. Device according to one of Claims 9 to 26, **characterized in that** the socket holder (55) is mounted (56) pivotably on the frame (4) and is actuable by a driver (57) on the pivoting body (22).

## Revendications

1. Dispositif d'attelage pour véhicules tracteurs, constitué d'une barre d'attelage (11) qui est seulement supportée autour de deux axes de rotation (24, 40) de manière mobile sur un bâti (4) du dispositif d'attelage (1) et d'un entraînement mécanique (16) pour le déplacement de la barre d'attelage (11) entre une position de fonctionnement (2) et une position de repos (3), l'entraînement (16) présentant un moteur d'entraînement (17) et un dispositif (19) pour produire un mouvement de rotation de la barre d'attelage (11) au moins en partie superposé autour des deux axes (24, 40), le moteur d'entraînement (17) étant disposé et fixé sur le bâti (4),
le dispositif (19) présentant un corps pivotant (22) qui est monté de manière pivotante sur le bâti (4) au moyen d'un palier pivotant (23) et dans lequel la barre d'attelage (11) est montée de manière rotative (39),
le dispositif (19) présentant une transmission (20) accouplant l'axe de pivotement (24) et l'axe de rotation (40), le mouvement de rotation de la barre d'attelage (11) autour de l'axe de rotation (40) étant dérivé du mouvement de pivotement de la barre d'attelage (11) ou du corps pivotant (22) et le moteur d'entraînement (17) agissant sur une première partie de transmission (21) qui est réalisée sous forme de transmission pivotante et présente un élément de prise de force (18) connecté au moteur d'entraînement (17), de préférence un pignon, et un élément d'entraînement (30) en prise avec le pignon et connecté au corps pivotant (22) par engagement rotatif, notamment une roue dentée à denture droite.

2. Dispositif selon la revendication 1, **caractérisé en ce que** la barre d'attelage (11) présente un support sur palier à Cardan avec un palier pivotant (23) et un palier rotatif (39) avec des axes (24, 40) de rotation se croisant essentiellement à angle droit.

3. Dispositif selon la revendication 1 ou 2, **caractérisé en ce que** la barre d'attelage (11) présente une forme courbe et est montée de manière rotative par l'une de ses extrémités de barre (14) autour d'un axe de rotation (40) sensiblement vertical dans la position de fonctionnement (2) et autour d'un axe de pivotement (24) situé sensiblement dans la direction longitudinale du véhicule.

4. Dispositif selon la revendication 1, 2 ou 3, **caractérisé en ce que** la barre d'attelage (11) présente, autour de l'axe de rotation (40), un angle de rotation de sensiblement 90°, et autour de l'axe de pivotement (24) un angle de pivotement d'environ 90° ou plus, de préférence d'environ 150° à 190°.

5. Dispositif selon la revendication 3 ou 4, **caractérisé en ce que** la barre d'attelage (11), dans la position de repos (3), est orientée le long du bâti (4) et pénètre dans un espace libre (9) du bâti (4), la barre d'attelage (11) étant tournée vers le haut avec sa courbure (13).

6. Dispositif selon l'une quelconque des revendications précédentes, **caractérisé en ce que** l'élément d'entraînement (30) est réalisé sous forme de disque.

7. Dispositif selon l'une quelconque des revendications précédentes, **caractérisé en ce que** l'élément d'entraînement (30) est monté de manière rotative sur le corps pivotant (22), l'élément d'entraînement (30) présentant un dispositif d'entraînement (31) qui agit en remorquant sur un organe d'entraînement (34) disposé sur le corps pivotant (22).

8. Dispositif selon l'une quelconque des revendications précédentes, **caractérisé en ce que** l'élément d'entraînement (30) est connecté par le biais d'une roue libre (35) au corps pivotant (22).

9. Dispositif selon l'une quelconque des revendications 5 à 8, **caractérisé en ce que** le bâti (4) est réalisé sous forme de boîtier en forme de caisson, entourant l'espace libre (9) et ouvert vers le haut et vers le bas, sur lequel sont montés le corps pivotant (22), le moteur d'entraînement (17) et un support de prise (55).

10. Dispositif selon l'une quelconque des revendications précédentes, **caractérisé en ce qu'**une deuxième partie de transmission (38) avec des éléments de transmission coopérants (41, 42) est prévue sur la barre d'attelage (11) et sur le bâti (4), qui convertit le mouvement de pivotement du corps pivotant (22) en un mouvement de rotation de la barre d'attelage (11) autour de l'axe de rotation (40).

11. Dispositif selon la revendication 10, **caractérisé en ce que** l'un des éléments de transmission (41) sur la barre d'attelage (11) est réalisé sous forme de couronne dentée sensiblement solidaire en rotation et l'autre élément de transmission (42) sur le bâti (4) est réalisé sous forme d'une rangée courbe d'ouvertures de paroi.

12. Dispositif selon la revendication 11, **caractérisé en ce que** l'élément de transmission (41) sur la barre d'attelage (11) présente un support à ressort (45).

13. Dispositif selon la revendication 10, 11 ou 12, **caractérisé en ce que** la deuxième partie de transmission (38) présente un déclencheur (43).

14. Dispositif selon la revendication 13, **caractérisé en ce que** le déclencheur (43) présente un dispositif d'entraînement en rotation (44) connecté de manière solidaire en rotation à la barre d'attelage (11), lequel coopère avec une butée fixée au bâti (46).

15. Dispositif selon l'une quelconque des revendications 7 à 13, **caractérisé en ce que** le dispositif d'attelage (1) présente un dispositif de verrouillage (48) avec une fixation en rotation (50) pour le verrouillage de la barre d'attelage (11) dans la position de fonctionnement sortie (2), laquelle fixation en rotation se compose de l'organe d'entraînement (34), par exemple un corps de roulement, notamment une bille, et d'un creux de réception (51) à l'extrémité de la barre (14) ainsi que d'un élément de blocage (52).

16. Dispositif selon la revendication 15, **caractérisé en ce que** la fixation en rotation (50) présente un élément de blocage (52) pouvant être actionné par l'organe d'entraînement (34) maintenu mobile et pouvant être amené en prise de blocage avec le bâti (4).

17. Dispositif selon la revendication 15 ou 16, **caractérisé en ce que** le col de la barre (12) présente un creux de réception (51) dans lequel l'organe d'entraînement (34) pénètre à la fin du mouvement de rotation de la barre d'attelage (11) sous l'action du dispositif d'entraînement (31).

18. Dispositif selon l'une quelconque des revendications 15, 16 ou 17,
**caractérisé en ce que** le dispositif d'attelage (1) présente un dispositif de verrouillage (48) en plusieurs parties avec une butée sphérique (49) sur le bâti (4), la barre d'attelage (11) pouvant adopter, avec le dispositif de verrouillage (48) dans les différentes positions d'extrémité, des positions de fin de course définies et fixées.

19. Dispositif selon l'une quelconque des revendications 15 à 18, **caractérisé en ce que** la roue libre (35) de l'élément d'entraînement (30) est prévue pour actionner la fixation en rotation (50) à la fin du mouvement de pivotement et de rotation de la barre d'attelage (11) et pour rappeler le corps pivotant (22).

20. Dispositif selon l'une quelconque des revendications 8 à 19, **caractérisé en ce que** la roue libre (35) présente une rainure de guidage (36) sur l'élément d'entraînement (30) et une goupille de guidage (37) s'engageant dans celui-ci, sur le corps pivotant (22).

21. Dispositif selon l'une quelconque des revendications 7 à 20, **caractérisé en ce que** le dispositif d'entraînement (31) sur l'élément d'entraînement (30) pénètre dans une piste de guidage (27) sur le corps pivotant (22), l'élément d'entraînement saillant (34) étant maintenu de manière déplaçable transversalement dans une ouverture de réception (28) sur la piste de guidage (27), et étant supporté jusqu'à la fin du mouvement de pivotement et de rotation de la barre d'attelage (11) sur le col de la barre (12).

22. Dispositif selon l'une quelconque des revendications 7 à 21, **caractérisé en ce que** le dispositif d'entraînement (31) est réalisé sous forme de coulisseau et présente une piste de came (32) pour glisser sur l'organe d'entraînement (34) pénétrant.

23. Dispositif selon la revendication 22, **caractérisé en ce que** la piste de came (32) présente sur son côté supérieur une forme en gradins (33).

24. Dispositif selon l'une quelconque des revendications 21, 22 ou 23, **caractérisé en ce que** l'élément de blocage (52) est disposé à l'extrémité de l'ouverture de réception (28) et peut être amené en prise par engagement positif avec une ouverture conjuguée (54) sur le bâti (4).

25. Dispositif selon l'une quelconque des revendications 15 à 24, **caractérisé en ce que** l'élément de blocage (52) est réalisé sous forme de goujon de blocage sollicité par ressort (53).

26. Dispositif selon l'une quelconque des revendications 21 à 25, **caractérisé en ce que** l'ouverture de réception (28) présente une goupille de support latérale (29) pour le guidage de l'organe d'entraînement (34) lors du mouvement transversal.

27. Dispositif selon l'une quelconque des revendications 9 à 26, **caractérisé en ce que** le support de prise (55) est monté (56) de manière pivotante sur le bâti (4) et peut être actionné par un dispositif d'entraînement (57) sur le corps pivotant (22).
